# EUROPEAN PATENT APPLICATION

(11) **EP 1 061 742 A2**
(43) Date of publication of application: **20.12.2000**
(21) Application number: 00303318.0
(22) Date of filing: 19.04.2000
(51) Int. Cl.: H04N 7/16, H04N 5/00

(54) **Apparatus and method for providing computer network information on a video channel**

(30) Priority: 08.06.1999 US 327744
(71) Applicant: AT&T Corp., New York, NY 10013-2412 (US)
(72) Inventor: Bansal, Pradeep K., Middlesex County, New Jersey 08810 (US); Begeja, Lee, Morris County, New Jersey 07933 (US); Creswell, Carroll W., Somerset County, New Jersey 07920 (US); Farah, Jeffrey Joseph, Middlesex County, New Jersey 08902 (US)
(74) Representative: Asquith, Julian Peter

(57) **Abstract**

A head end device (114) for gathering computer network data, such as Internet data, in accordance with a subscriber's preferences, and transmitting the computer network data to a terminal (102, 104) along with various other channels of video programming. After collecting computer network data, the head end device (114) converts the computer network data into a television signal and multiplexes the computer network and video data together onto separate channels of a multiplexed signal and transmits the multiplexed signal over a network to a terminal (102, 104). Based on a unique terminal ID of each terminal, the network selectively routes the computer network data portion of the multiplexed signal that is specific to each terminal to the respective terminals. Accordingly, the various terminals may tune into an computer network channel and receive customized computer network data that is specific to the terminal ID of the terminal.

## Description

### BACKGROUND OF THE INVENTION

### 1. Field of Invention

This invention relates to an apparatus and method for providing computer network information on a television channel.

### 2. Description of Related Art

Currently, conventional communications systems, such as conventional cable systems, provide subscribers with video programming as well as access to the Internet. In order to access Internet services over a cable system, the subscribers must either have a personal computer or an alternative device, such as a computer assisted television (i.e., Web TV), connected with the cable network. However, these devices require the subscriber to purchase extra equipment to have the capability to view the cable programming and access the Internet.

### SUMMARY OF THE INVENTION

The invention provides a head end device for gathering computer network data, such as Internet data, in accordance with a subscriber's preferences, and transmitting the computer network data to a terminal along with various other channels of video programming. After collecting the computer network data, the head end device converts the computer network data into video signal, e.g., a television signal, and multiplexes the computer network video signal and other video data together onto separate channels of a multiplexed signal. The head end device then transmits the multiplexed signal over a network which routes the multiplexed signal to all of the terminals connected with the network. Based on a unique terminal ID of each terminal, the network can selectively route the computer network data portion of the multiplexed signal to specific terminals. Alternatively, each of the terminals may receive the entire multiplexed signal, i.e., including computer network data intended for other terminals, and thereafter, selectively tune into only the portion of the computer network data corresponding to the respective terminal. Accordingly, the various terminals may tune into a computer network channel and receive customized computer network data that is specific to the terminal ID of the terminal.

The head end device may be instructed to gather data from the computer network for a specific terminal in accordance with a set of stored user preferences. The subscriber's preferences may be stored in the head end device and can be altered by the subscriber through a call to the head end device that enters instructional commands for changing the preferences. Additionally, the subscriber may log onto the head end device through a computer network to access the subscriber's account and change the subscriber's preferences.

The computer network data may further be formatted into a home page or other format specific to a subscriber's preferences. For example, the home page for a particular terminal may include the weather report for a specific geographical region, stock quotes related to the subscriber's stock portfolio, or e-mail that the subscriber has received.

To view the home page, the head end device may display a page or a screen full of information at a time and periodically step through sequential pages of computer network data. Alternatively, the head end device may display the computer network data so that it constantly scrolls through the home page in a looping manner.

Additionally, the subscriber may interact with the head end device through an input at the subscriber's terminal. Instructional commands input into the subscriber's terminal may be transmitted to the head end device so that the subscriber may instruct the head end device on how to manipulate the computer network data or configure the subscriber's computer network channel. Furthermore, instructional commands may be used to instruct the head end device on how to navigate to various sites on the computer network.

### BRIEF DESCRIPTION OF THE DRAWINGS

The invention is described in detail with regard to the following figures, wherein like numeral references refer to like elements, and wherein:
Fig. 1 is an exemplary block diagram of a head end system according to the invention;
Fig. 2 is an exemplary block diagram of the head end device of Fig. 1;
Fig. 3 is an exemplary block diagram of the network interface device of Fig. 1;
Fig. 4 is an exemplary data structure for storing head end information according to the invention; and
Fig. 5 is a flowchart outlining an exemplary process for transmitting video and computer network data.

### DETAILED DESCRIPTION OF PREFERRED EMBODIMENTS

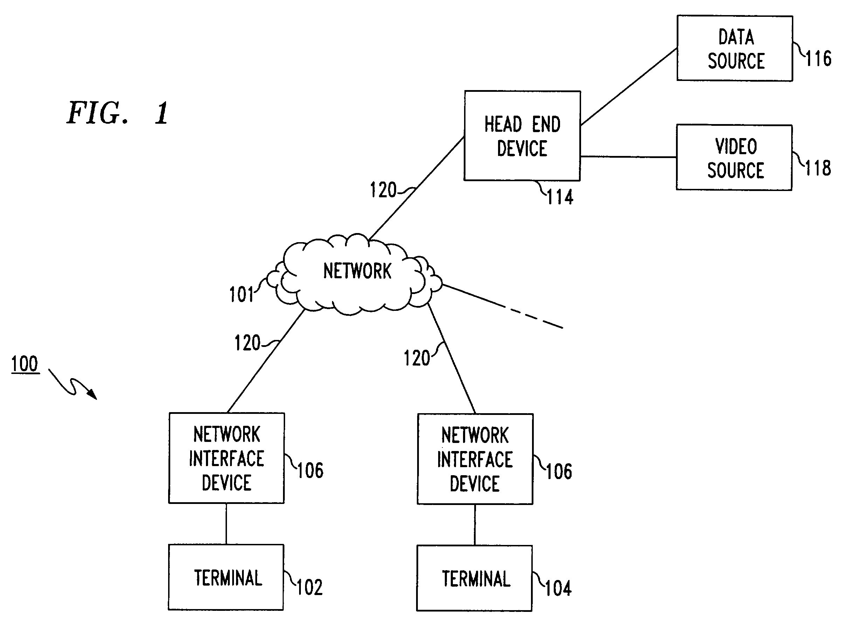

Fig. 1 is an exemplary block diagram of a system 100 according to the present invention. As shown in Fig. 1, the system 100 includes terminals 102 and 104 coupled with a network 101 by communication links 120 through network interface devices 106. The system 100 further includes a head end device 114, a data source 116, and a video source 118 coupled to the network 101 by way of a communication link 120.

Terminals 102 and 104 may be devices of any type that allow for transmission and/or reception of communication signals. For example, terminals 102 and 104 may be televisions, computers, personal digital assistants, video telephones, video conference apparatus, smart, or computer-assisted televisions, and the like. For the purposes of the following description, it will be assumed that terminals 102 and 104 are televisions.

The network interface 106 receives information, such as video information, from the network 101 and provides a video or other signal to the terminals 102 or 104 to display or otherwise present the video or other information. In this example, the network interface device 106 provides at least a television signal to the terminals 102 or 104 to display a desired video channel. However, the network interface device 106 could provide other information or other signal types, such as audio signals or signals to drive a Braille-type display device, to the terminals 102 or 104.

The network 101 may be a single network, or a plurality of networks of the same or different types. For example, the network 101 may include a local network in connection with a long distance network. Further, the network 101 may be a cable network, wireless communications network or any other communications system. Any combination communication networks may be used without departing from the spirit and scope of the present invention. For the purposes of discussion, it will be assumed that network 101 is a single cable network.

The communications links 120 may be any type of connection that allows the transmission of information. Some examples include conventional telephone lines, fiber optic lines, direct serial connections, cellular telephone connections, satellite communication links, local area networks (LANs), intranets, and the like.

The head end device 114 gathers and/or receives computer data information, such as Internet web page data, from the data source 116 and video information, such as broadcast network television signals, from the video source 118. Alternatively, the computer data and video information may be gathered from a single source which supplies both types of information. The head end device 114 combines the computer data information and the video information into a multiplexed signal, which is provided to the network interface devices 106. Thus, the terminals 102 or 104 can display images, sound or other information based on the computer data information and/or the video information.

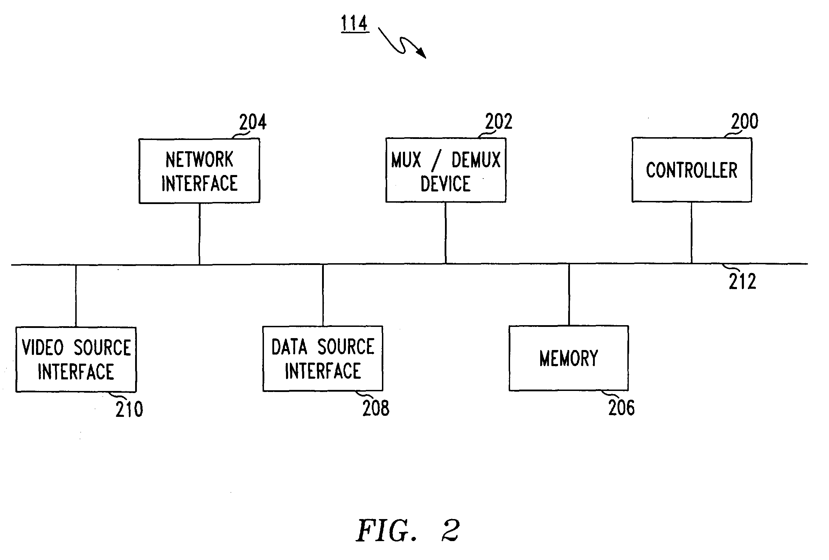

Fig. 2 is an exemplary block diagram of the head end device 114. The head end device 114 includes a controller 200, a multiplexing/demultiplexing device 202, a network interface 204, a memory 206, a data source interface 208 and a video source interface 210. As described above, the data source interface 208 and the video source interface 210 can be combined into a single interface for gathering data from a single source. The above components are coupled together through control/signal bus 212.

During operation of the head end device 114, the controller 200 receives video data from the video source 118 through the video source interface 210. The video source 118 can be any source of video information, such as a cable feed, satellite feed, television receiver, video cassette player, or the like. The video source 118 may be a separate component or incorporated into the head end device 114. The controller 200 may constantly transmit the video data on an allocated set of video channels (i.e., channels 1-98) via the network 101 to the terminals 102, 104 through network interface 204 similar to the service provided by cable television providers.

Additionally, the controller 200 gathers computer network data from the data source 116 through the data source interface 208. The data source 116 may be any Internet network service provider (ISP), which is capable of accessing computer network resources, such as various web sites, or any other computer network. Additionally, the data source may be an ISP or other entity or device that provides data services, such as e-mail. The controller 200 can search the data source 116 via the data source interface 208 to gather specific information in accordance with a subscriber's preferences. Each terminal 102's, 104's preferences may be stored in the memory 206 or in a memory of the network interface device 106 or terminal 102, 104.

Once the controller 200 gathers the computer data information, the information is then aggregated into a home page or any other desired format. The home page can be a format that the subscriber has chosen to have their respective computer network data displayed on their terminal 102, 104. For example, a subscriber's home page may consist of three parts: weather report, stock report, and e-mail. Accordingly, when a subscriber tunes into the computer network channel, the subscriber's home page may step through the various parts in a sequential order, alternatively slowly scroll through the parts in a looping manner, etc. For the above example, each part of the home page may be displayed for a predetermined period of time before advancing the display to a next part. In other words, a weather display may be initially shown, and once a certain time had passed, the stock portion of the home page would then be displayed. Again, after a certain time period, the subscriber's e-mail messages would be stepped through in a similar manner before the display returns to the weather portion at the beginning of the home page.

After the controller 200 has gathered and formatted the subscriber's information, the controller 200 converts the information into a video signal, such as a television signal. The controller 200 then multiplexes the television signal on an allocated computer data channel (e.g., channel 99) with the video data signal (channels 1-98) to form a multiplexed signal (channels 1-99). Furthermore, the controller 200 transmits the multiplexed signal to terminals 102, 104 via the network 101 through network interface 204.

Alternatively, the controller 200 can combine the computer data video channel with the video data signal to create a video data channel also having computer data. For example, the controller 200 could combine the computer and video data so that a window of computer data is displayed in the upper right corner of the video data. Accordingly, a user of the terminal 102, 104 could simultaneously view the video data while the computer data window is being displayed in the upper right corner in a similar manner to picture in picture (PIP) technology. It is to be understood that various formats and combinations of video data and computer data can be used without departing from the spirit and scope of the present invention.

The multiplexing may be accomplished by any of the protocols well-known in the art. For example, frequency division multiplexing (FDM), time division multiplexing (TDM), code division multiplexing (CDM), wavelength division multiplexing (WDM), or the like may be used without departing from the spirit and scope of the present invention.

The multiplexed signals include a plurality of channels (e.g., channels 1-99) which terminals 102, 104 are able to selectively receive and display. Accordingly, in the above example, the multiplexed signal would contain video programming, such as standard cable television programming, on channels 1-98 while channel 99 would contain a television signal corresponding to computer network data. It is to be understood that various channel allocation schemes may be used without departing from the spirit and scope of the present invention.

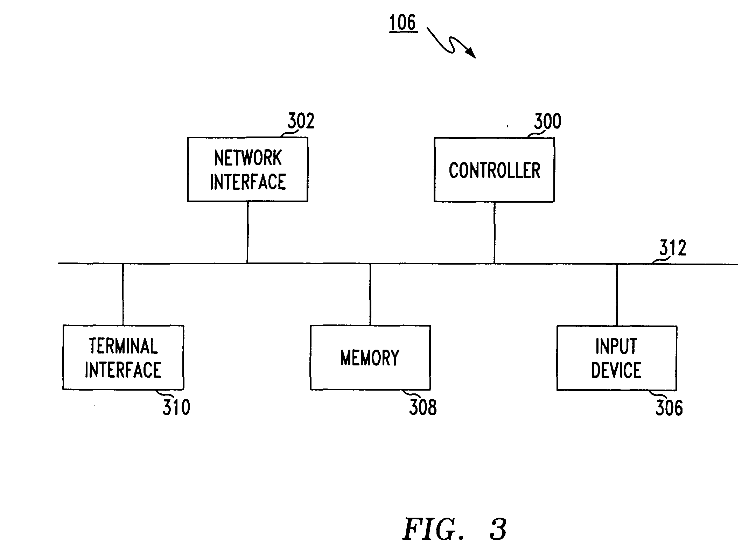

Fig. 3 is an exemplary block diagram of a network interface device 106. The network interface device 106 includes a controller 300, a network interface 302, an input device 306, a memory 308, and a terminal interface 310. The above components are coupled together through a control/signal bus 312.

The memory 308 stores a terminal ID that is unique to a particular terminal. The interface controller 300 may broadcast the terminal ID to the network 101 through network interface 302, whereupon a multiplexed signal containing only the video data and the computer network data particular to that terminal ID is sent to the respective terminal 102, 104 through terminal interface 310. The network interface device 106 then sends the multiplexed signal to terminals 102, 104. If the terminal 102 is a television, the terminal 102, 104 may receive a television signal corresponding to the video data on the set of video channels, while receiving a television signal corresponding to the computer network data on a different computer network channel. Moreover, the computer network data can be pre-formatted into a home page, as described above, that has been customized to meet the particular preferences of a subscriber.

The network interface device 106 includes input device 306 for receiving instructional commands from a subscriber. The instructional commands may be input by keypad, remote control, voice commands, or the like. The instructional commands can be sent via network 101 to the head end controller 200, whereupon the computer network data being sent to the particular terminal 102, 104 is modified. For example, instructional commands may be used to modify the subscriber's computer network preferences, and thereby modify the subscriber's home page. Additionally, the instructional commands may instruct the controller 200 to navigate the computer network in order to display and interact with any of the various sites contained thereon, or select a particular channel for display on the terminal 102, 104.

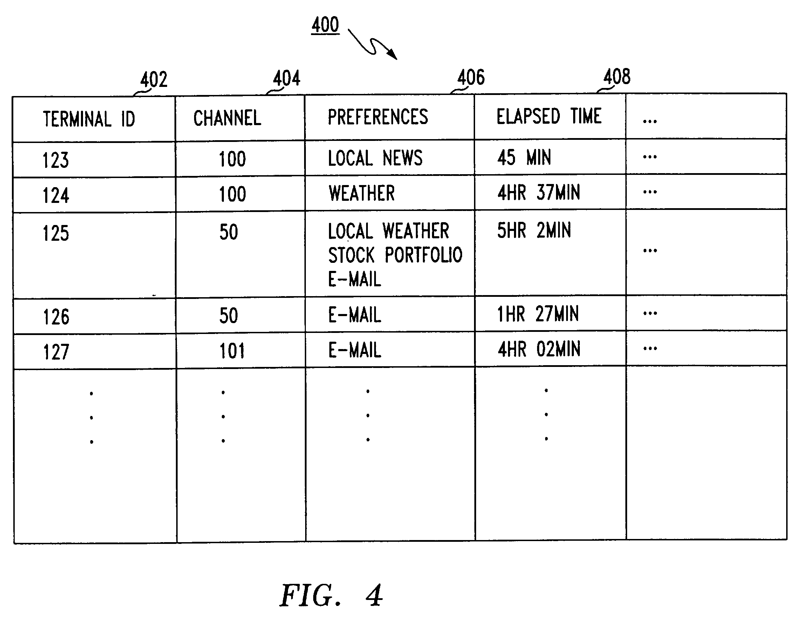

Fig. 4 shows an exemplary data structure 400 for storing a subscriber's preferences of the individual terminals connected with network 101. The data structure 400 includes field 402 which contains a terminal ID that identifies each terminal currently subscribing to the services of the head end device 114. The terminal ID stored in field 402 corresponds to the terminal ID stored in the memory 308 of network interface device 106.

Field 404 contains the channel on which the particular terminal is to receive a television signal corresponding to the computer network data. For example, terminal ID 123 will receive computer network data on channel 100.

Field 406 contains the subscriber's preferences which a subscriber has chosen to include in a corresponding computer network channel. For example, terminal ID 125 has chosen to have computer network data relating to local weather, stocks, and e-mail displayed on a computer network channel. Furthermore, field 406 may contain URLs or other addresses of sites a particular subscriber wishes to visit or monitor. As described above, the computer network data preferences may be customized by a subscriber at any time during the use of the services.

Field 408 contains the elapsed time the service is used by the subscriber. For example, the elapsed time corresponding to terminal 126 is 1 hour and 27 minutes. Field 408 may be used for billing purposes, whereby customers may be billed by the amount of time they spend using the system during a given month.

As an example of the operation of the head end device 114, assume that Steve is a subscriber and is currently watching a morning news program on channel 5 of his terminal 102. During a commercial, Steve changes the channel of his terminal 102 to channel 99, which is his computer network data channel.

On channel 99, Steve finds his home page which Steve had previously customized to display only his e-mail messages. As he watches the computer network channel, he reads his e-mail as it slowly scrolls vertically across the screen. Within a period of 5 minutes, all of his e-mail messages have scrolled across the screen and the process is starting to repeat when Steve changes the channel back to the morning news on channel 5.

Later that afternoon, after receiving information that the Stock Market had performed poorly during trading, Steve decides that he would like to include his stock portfolio on his home page so that he can closely monitor any changes. He turns his television to the computer network channel 99 and inputs an instruction command through his network interface device 106 to change his computer network preferences from only displaying his e-mail to only displaying his stock portfolio. Thereafter, the computer network channel displays only information related to his stock portfolio.

Additionally, later that evening, Steve finds it necessary to view information on a particular Internet web-site. Accordingly, Steve turns his terminal 102 to the computer network channel 99 and inputs a series of instructional commands instructing the head end device 114 to gather information related to the web-site. Thereafter, the web-site is displayed on Steve's computer network channel 99 for viewing.

In an alternative example, Steve's home page could be set up to automatically send different displays based on the time of day, date, or the like. Additionally, multiple computer network channels may be set up for the individual members of Steve's family. Accordingly, each family member can view an individual computer network channel separately.

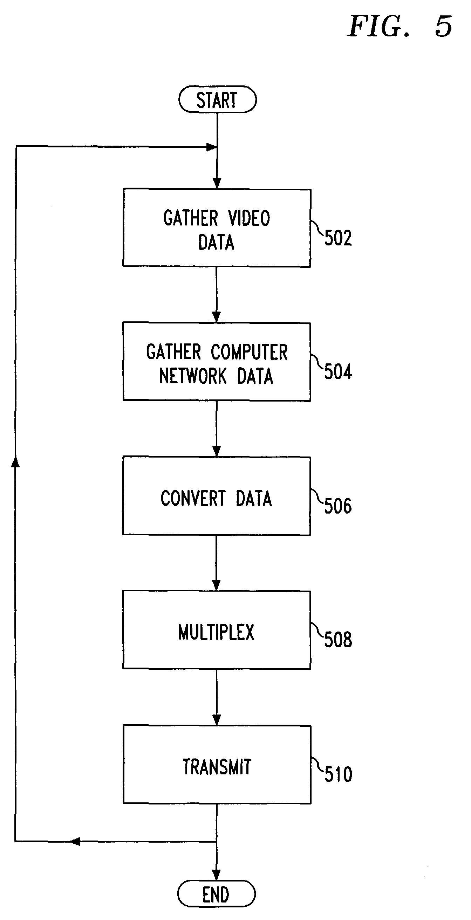

Fig. 5 is a flowchart outlining one exemplary process of the invention. In step 502, video data is gathered from a video source. For example, a controller could receive a plurality of television signals from a cable or satellite feed.

Next, in step 504 computer network data is gathered in accordance with a preference of a subscriber. The computer network data may further be aggregated into a format in accordance with the preferences of a subscriber. For example, a controller could interface with a data source, such as the Internet, to search for and retrieve any information requested by the subscriber's preferences.

In step 506, the gathered computer network data is converted into a video signal for display by the subscriber. For example, a controller may receive the computer network data in any format and convert the data into a video format capable of being displayed on a terminal.

Next, in step 508 the video data and computer network data are combined, e.g., multiplexed onto separate channels of a multiplexed signal.

In step 510, the multiplexed signal is output so that the video data channels and computer network channels may be viewed by a subscriber.

After completing step 510, the process returns to step 502 whereupon the process is repeated.

As shown in Figs. 2 and 3, the method of this invention is preferably implemented on a programmed data processor. However, the storage device 114 can also be implemented on a general purpose or a special purpose computer, a programmed microprocessor or microcontroller and peripheral integrated circuit elements, an Application Specific Integrated Circuit (ASIC), or other integrated, a hardware electronic or logic circuit such as a discrete element circuit, a programmable logic device such as a PLD, PLA, FPGA, or PAL, or the like. In general, any device on which a finite state machine capable of implementing the flowcharts shown in Fig. 5 can be used to implement the storage device 114 functions of this invention.

While this invention has been described in conjunction with the specific embodiments thereof, it is evident that many alternatives, modifications, and variations will be apparent to those skilled in the art. Accordingly, preferred embodiments of the invention as set forth herein are intended to be illustrative, not limiting. There are changes that may be made without departing from the spirit and scope of the invention.

## Claims

1. A method for transmitting video and computer data information over a network, comprising:
gathering computer network data;
converting the computer network data into a data video signal;
multiplexing the data video signal with a video signal to form a multiplexed signal; and
transmitting the multiplexed signal.

2. The method according to claim 1, wherein the video signal includes a plurality of channels that are allocated to a first portion of the multiplexed signal, and the data video signal is allocated to a second portion of the multiplexed signal.

3. The method according to claim 2, wherein the second portion of the multiplexed signal is addressed to a particular terminal so that each of a plurality of terminals receives only a respective portion of the computer network data.

4. The method according to claim 1, further comprising formatting the computer network data into a home page based on a subscriber's preferences.

5. The method according to claim 1, wherein the gathering step includes selectively gathering computer network data based on a subscriber's preferences.

6. The method according to claim 1, further comprising:
receiving instructional commands from the terminal; and
modifying the computer network data based on the instructional commands.

7. An apparatus for transmitting video and computer data information over a network, comprising:
a network interface;
a video source interface for receiving a video signal;
a data source interface for receiving computer network data; and
a controller connected with the network, the video source interface, and the data source interface that converts the computer network data into a data video signal, multiplexes the data video signal with the video signal to form a multiplexed signal, and transmits the multiplexed signal.

8. The apparatus according to claim 8, wherein the video signal includes a plurality of channels that are allocated to a first portion of the multiplexed signal, and the data video signal is allocated to a second portion of the multiplexed signal.

9. The apparatus according to claim 9, wherein the second portion of the multiplexed signal is addressed to a particular terminal so that each of a plurality of terminals receives only a respective portion of the computer network data.

10. The apparatus according to claim 8, wherein the controller further formats the computer network data into a home page based on a subscriber's preferences.

11. The apparatus according to claim 8, wherein the data source interface selectively gathers computer network data based on a subscriber's preferences.

12. The apparatus according to claim 8, wherein the controller further receives instructional commands from the terminal and modifies the video signal based on the instructional commands.
